Europäisches Patentamt

European Patent Office

Office européen des brevets

(11) Publication number: **0 064 226**
**B1**

(12) **EUROPEAN PATENT SPECIFICATION**

(45) Date of publication of patent specification: **02.10.85**

(21) Application number: **82103395.8**

(22) Date of filing: **22.04.82**

(51) Int. Cl.⁴: **C 04 B 35/10, C 01 F 7/02, H 01 M 8/10**

(54) **Ceramic hydrogen ion conductor and its preparation.**

(30) Priority: **28.04.81 CA 376561**

(43) Date of publication of application:
**10.11.82 Bulletin 82/45**

(45) Publication of the grant of the patent:
**02.10.85 Bulletin 85/40**

(84) Designated Contracting States:
**BE CH DE FR GB IT LI**

(56) References cited:
**US-A-4 197 365**

**MATERIALS RESEARCH BULLETIN, vol. 15, no. 10, October 1980, pages 1517-1524, New York (USA); A. PEKARSKY et al.: "The relative stability of spray-frozen/freeze-dried beta"-A1203 powders"**
**BULLETIN OF THE CHEMICAL SOCIETY OF JAPAN, vol. 41, January 1968, pages 93-99, Tokyo (JP); G. YAMAGUCHI: "On the structures of alkali polyaluminates"**

(73) Proprietor: **Canadian Patents and Development Limited**
**275 Slater Street**
**Ottawa Ontario, K1A OR3 (CA)**

(72) Inventor: **Nicholson, Patrick Stephen**
**323 Hamilton Drive**
**Ancaster Ontario (CA)**
Inventor: **Nagai, Masayuki**
**218-1928 Main Street West**
**Hamilton Ontario (CA)**
Inventor: **Wheat, Thomas Anthony**
**144 Faraday Street**
**Ottawa Ontario (CA)**

(74) Representative: **Patentanwälte Schulze Horn und Hoffmeister**
**Goldstrasse 36**
**D-4400 Münster (DE)**

(56) References cited:
**JOURNAL OF APPLIED ELECTROCHEMISTRY, vol. 11, no. 1, January 1981, pages 77-82, London (GB); T. TAKAHASHI et al. "Synthesis of potassium beta-alumina by thermal decomposition of a complex"**

MATERIALS RESEARCH BULLETIN, vol. 11, no. 2, February 1976, pages 233-242, New York (USA); P.E.D. MORGAN: "Low temperature synthetic studies of beta-aluminas"

CHEMICAL ABSTRACTS, vol. 81, no. 12, 23rd September 1974, page 599, no. 71944u, Columbus Ohio (USA); T. NISHIKAWA et al.: "Preparation of alkali-substituted beta-alumina by immersion in aqueous solutions of alkali hydroxides"

MATERIALS RESEARCH BULLETIN, vol. 15, no. 11, November 1980, pages 1611-1619, New York (USA); A. TEITSMA et al.: "Polycrystalline hydronium beta/beta"-alumina: A ceramic fast proton conductor"

## Description

This invention relates to the preparation of a precursor for a ceramic hydrogen ion conductor and more particularly to a ceramic compound which has an affinity for hydrogen ions and particularly protons in the form of hydronium ($H_3O^+$) ions.

As such the invention concerns itself with a method of making a powder conductor for protons that is capable of use as the solid electrolyte in hydrogen fuel cells, concentration cells and vapour-phase water electrolysis cells.

It is known that $H_3O^+$—$\beta''$-$Al_2O_3$ is a superior conductor of protons but it is difficult to synthesize this material into the preferred polycrystalline form. $H_3O^+$—$\beta''$-$Al_2O_3$ is almost always accompanied by its $\beta$-$Al_2O_3$ phase, which is less conductive for protons. Thus the $\beta''$-alumina phase is to be preferred within any composition to the $\beta$-phase.

In "Material Research Bulletin, Vol. 15, 1611—1619" the preparation of polycrystalline hydronium $\beta/\beta''$-alumina with a high proportion of $\beta''$-alumina phase has already been described. In a first step a MgO stabilized $Na^+$—$\beta/\beta''$-$Al_2O_3$ compound is prepared by spraying a water solution of feed components into liquid nitrogen, vacuum drying the resultant powder at elevated temperatures and calcining and annealing the powder in a gas/air furnace at high temperatures. In two other steps, treating with a $KNO_3$ melt and submerging in $H_2SO_4$, the sintered samples are transformed into their corresponding potassium and hydronium derivatives.

All samples obtained by this preparation tend to shatter into powder again. The mechanical breakdown, which probably occurs during the $Na^+$—$K^+$ exchange, is a result of too small interstitial spaces within the $\beta''$-alumina phase for accommodation of the dimensionally larger $K^+$-ion.

Thus this preparation is not suitable for the fabrication of hydronium $\beta/\beta''$-alumina compounds which are pressed into a rigid form.

Furtheron it is known from "Bulletin of the Chemical Society of Japan, Vol. 41, 93—99" to prepare sodium- and potassium alumina by sintering and annealing appropriate mixtures of aluminium hydroxide and alkali carbonate. Both compounds form $\beta'$- and $\beta''$-alumina phases, but the potassium compound tends to favour the $\beta''$-alumina phase. A potassium alumina compound with a suitable content of $\beta''$-alumina phase, which can be compressed and shaped into a rigid form and ion exchanged with hydronium is not disclosed.

An object of the invention is to provide a polycrystalline powder which can be compressed and shaped into a rigid form and which after sintering can be ion exchanged with hydronium in order to create a solid hydronium ion conductor.

Accordingly, the present invention provides a white powder of small granular structure consisting of potassium alumina with a $\beta''$-alumina phase in excess of 60% and not greater than 95% by weight.

The potassium alumina compound according to the invention is a superior precursor for solid polycrystalline bodies that offer satisfactory exchange characteristics for hydronium.

The $\beta''$-alumina phase of the potassium alumina compound is almost 100% ion exchangeable as a result of acid treatment and avoids costly preparation steps which are consistent with the prior art.

In one preferred embodiment the $\beta''$-alumina phase is between 80% and 90% by weight.

The invention also provides a method of making an ultra fine crystalline powder of $K^+$—$\beta''$-$Al_2O_3$ in high yields. The method comprises the steps of:

(a) selecting as constituent feed compounds $Na_2CO_3$ and $K_2CO_3$ and $MgSO_4$ and $Al_2(SO_4)_3$ in percentage (%) weight ratios in the range of 1 to 3 for $Na_2CO_3$, 8.2 to 11.5 for $K_2Co_3$, 2.0 for $MgSo_4$, 85.2 to 86.9 for $Al_2(SO_4)_3$;

(b) mixing the feed compounds;

(c) dissolving the feed compounds in measure of water until a clear dissolved solution is obtained;

(d) atomizing the clear solution into a spray;

(e) freezing the spray to form frozen mixes of the feed components on an atomic scale;

(f) vacuum-drying the frozen compounds;

(g) calcining the frozen compound to evolve off water and sodium until the said powdered crystalline potassium compound is achieved.

Preferably the freezing takes place in liquid nitrogen.

The invention will now be described by way of example, there being no drawings.

The synthesis of a dense K—$\beta''$-$Al_2O_3$ compound (actually $K^+$—$\beta''$-$Al_2O_3$) involves a novel technique which results in an extremely high $\beta''$ phase in the powder. This technique involves, in summary, spraying a solution of an appropriate chemical solution mix into liquid nitrogen ($N_2$) and freeze drying the resultant "powder" to give an intimate mixture, on an atomic scale, of the original chemicals. On calcination and the evolution of volatiles under heat, the resultant oxide mixture converts to the $\beta''$-$Al_2O_3$ phase as a result of super activity of the powder calcine.

Example
Constituent feed components

| Sample No. | Na$_2$CO$_3$ | K$_2$CO$_3$ | MgSO$_4$ | Al$_2$(SO$_4$)$_3$ | H$_2$O |
|---|---|---|---|---|---|
| Z-1 | 0.73 gr 1.0 wt% | 6.77 gr 10.5 wt% | 2.62 gr 2.0 wt% | 249.89 gr 86.6 wt% | 2L |
| Z-2 | 1.46 gr 1.9 wt% | 6.02 gr 9.3 wt% | 2.62 gr 2.0 wt% | 249.89 gr 86.8 wt% | 2L |
| Z-3 | 2.19 gr 2.9 wt% | 5.27 gr 8.2 wt% | 2.62 gr 2.0 wt% | 249.89 gr 86.9 wt% | 2L |
| A-1 | 0.73 gr 1.0 wt% | 7.78 gr 11.8 wt% | 2.71 gr 2.0 wt% | 249.89 gr 85.2 wt% | 2L |

The aforesaid samples were created in the following fashion.

In each instance the net weight or percentage weight of the constituent components of sodium carbonate, potassium carbonate, magnesium sulphate, aluminium sulphate hydrate and water wherein in each instance the 2 Litres of water dissolved the solid constituents by weight or percentage weight as indicated in the samples example table.

Upon dissolution, the solutions were clear.

In a vessel, liquid nitrogen was poured and into this volume of liquid nitrogen was sprayed, from the nozzle of an atomizer, the solution of sample Z-1 for example. On striking the surface of the liquid nitrogen the solution spray froze and white crystalline spheres were formed some of which adhered to the sides of the vessel, others of which fell into the liquid nitrogen and sank. The white powder adhering to the vessel wall was scraped down into the liquid nitrogen and spraying continued until no sample, Z-1, solution was left.

The liquid nitrogen was then allowed to boil off and the remanent powder removed into a tray.

The tray was transported and placed into a vacuum dryer and the vacuum dryer was closed. A vacuum was placed on the vacuum dryer and the temperature in the vacuum dryer elevated to approximately 104°C. The water phase within the powder was allowed to sublime off over a period of approximately 48 hours.

The result of the product was a white powder. This resultant was removed from vacuum dryer and placed in a kiln where it was elevated to a temperature of between 1250°C to 1300°C in order to calcine it for approximately 2 to 4 hours respectively.

Thereafter, crystallographic X-ray powder diffraction analysis was conducted in order to determine the β phase and β'' phase ratio of the constituent components and in relation to the samples. The highest average value of the unpreferred β phase was less than 20% while the lowest average value of the preferred β'' phase was in excess of 80%.

Specifically, the following results were achieved;

| Calcination time | F(β) lowest average value | F(β) actual values |
|---|---|---|
| 4 hr | 0.13 | (0.08, 0.17) |
| 4 hr | 0.08 | A-1 (0.09, 0.07) Z-1 (0.07, 0.08) |
| 4 hr | 0.11 | (0.08, 0.14) |
| 2 hr | 0.12 | (0.08, 0.3) |

Where F(β) is the β phase value.

**Claims**

1. A white powder of small granular structure consisting of potassium alumina with a β''-alumina phase in excess of 60% and not greater than 95% by weight.

2. The powder as claimed in Claim 1 wherein the β''-alumina phase is between 80% and 90% by weight.

3. A method of making an ultra fine crystalline powder of K$^+$—β''-Al$_2$O$_3$ comprising the steps of;

(a) selecting as constituent feed compounds Na$_2$CO$_3$ and K$_2$CO$_3$ and MgSO$_4$ and Al$_2$(SO$_4$)$_3$ in

4

**0 064 226**

percentage (%) weight ratios in the range of 1 to 3 for $Na_2CO_3$; 8.2 to 11.5 for $K_2CO_3$; 2.0 for $MgSO_4$; 85.2 to 86.9 for $Al_2(SO_4)_3$;

(b) mixing the feed compounds;

(c) dissolving the feed compounds in a measure of water until a clear dissolved solution is obtained;

(d) atomizing the clear solution into a spray;

(e) freezing the spray to form frozen mixes of the feed components on an atomic scale;

(f) vacuum-drying the frozen compounds;

(g) calcining the frozen compounds to evolve off water and sodium until the said powdered crystalline potassium compound is achieved.

4. The method as claimed in Claim 3, wherein the freezing takes place in liquid nitrogen.


**Patentansprüche**

1. Weißes Pulver mit einem feinkörnigen Gefüge, bestehend aus Kalium-Aluminiumoxid mit einer β''-Aluminiumoxidphase von mehr als 60% und nicht mehr als 95 Gew.-%.

2. Pulver nach Anspruch 1, dadurch gekennzeichnet, daß die β''-Aluminiumoxidphase zwischen 80 und 90 Gew.-% beträgt.

3. Verfahren zur Herstellung eines ultrafeinen kristallinen Pulvers von $K^+$—β''-$Al_2O_3$, gekennzeichnet durch folgende Schritte:

a) Einsatz der Ausgangsverbindungen $Na_2CO_3$, $K_2CO_3$, $MgSO_4$ und $Al_2(SO_4)_3$ im Bereich von 1—3 (Gew.-%) für $Na_2CO_3$, 8,2—11 (Gew.-%) $K_2CO_3$, 2,0 (Gew.-%), für $MgSO_4$ und 85,2—86,9 (Gew.-%) für $Al_2(SO_4)_3$;

b) Mischen der Ausgangsverbindungen;

c) Auflösen der Ausgangsverbindungen in einer Wassermenge, bis eine klare Lösung erhalten wird,

d) Zerstäuben der Lösung in einem Sprühstrahl;

e) Einfrieren des Sprühstrahls unter Bildung einer gefrorenen Mischung der Ausgangsverbindungen in atomarem Maßstab;

f) Vakuumtrocknung der gefrorenen Mischung;

b) Glühen der Mischung unter Abgabe von Wasser und Natrium bis das genannte pulverige kristalline Kalium-Aluminiumoxid erhalten wird.

4. Verfahren nach Anspruch 3, dadurch gekennzeichnet, daß das Einfrieren in flüssigem Stickstoff erfolgt.


**Revendications**

1. Poudre blanche de structure granulaire fine, constituée, de potassium-alumine avec une phase β''-alumine supérieure à 60% et ne dépassant pas 95% en poids.

2. Poudre suivant la revendication 1, dans laquelle la phase β''-alumine est comprise entre 80% et 90% en poids.

3. Procédé de fabrication d'une poudre cristalline ultrafine de $K^+$—β''-$Al_2O_3$, qui consiste à:

(a) choisir comme composés de départ $Na_2CO_3$ et $K_2CO_3$ et $MgSO_4$ et $Al_2(SO_4)$ en pourcentages (%) de l'ordre de 1 à 3 pour $Na_2CO_3$, 8,2 à 11,5 pour $K_2CO_3$, 2,0 pour $MgSO_4$, 85,2 à 86,9 pour $Al_2(SO_4)_3$;

(b) mélanger les composés de départ;

(c) dissoudre les composés de départ dans une quantité adéquate d'eau jusqu'à obtention d'une solution dissoute claire;

(d) atomiser la solution claire en un jet pulvérisé;

(e) congeler le jet pulvérisé, de manière à obtenir des mélanges congelés des composants de départ à une échelle d'atomisation;

(f) sécher sous vide les composés congelés;

(g) calciner les composés congelés pour chasser l'eau et le sodium, jusqu'à obtention du dit composé de potassium cristallin en poudre.

4. Procédé suivant la revendication 3, dans lequel la congélation s'effectue dans l'azote liquide.

5